# EUROPEAN PATENT SPECIFICATION

(11) **EP 0 528 901 B1**
(45) Date of publication and mention of the grant of the patent: **13.08.1997**
(21) Application number: 91909269.2
(22) Date of filing: 02.05.1991
(51) Int. Cl.: C02F 1/28, C02F 1/58, C02F 1/72, C02F 1/74

(54) **IMPROVED METHOD FOR SOLUTE TRANSFER BETWEEN SOLID AND LIQUID PHASES**
VERBESSERTES VERFAHREN ZUM TRANSPORT GELÖSTER SUBSTANZEN ZWISCHEN FESTEN UND FLÜSSIGEN PHASEN
PROCEDE AMELIORE DE TRANSFERT DE MATIERES DISSOUTES ENTRE UNE PHASE SOLIDE ET UNE PHASE LIQUIDE

(30) Priority: 02.05.1990 AU 9894/90
(43) Date of publication of application: 03.03.1993
(73) Proprietor: ECOLOGIC HOLDINGS PTY, LTD., Western Australia 6155 (AU)
(72) Inventor: BOWMAN, Martin Paul, Subiaco, W.A. 6008 (AU)
(74) Representative: West, Alan Harry
(86) International application number: AU9100175
(87) International publication number: WO9117119

(56) References cited:
- EP-A- 0 412 630
- WO-A-80/02556
- WO-A-85/04817
- AU-A- 3 666 578
- AU-A- 8 993 582
- DE-A- 3 720 917
- GB-A- 2 130 571
- US-A- 1 470 745
- US-A- 4 368 120
- US-A- 4 781 841

## Description

This invention relates in the first aspect to the non-biological treatment of contaminated effluents by sorption and, in particular, the treatment of domestic waste and in a second aspect to the desorption or leaching of selected components from a solid material and in particular, the extraction of metals from solid materials containing them.

In many residential areas where conventional central sewerage collection and treatment systems are not available, it is customary to use septic tanks wherein the domestic effluent is initially broken down biologically to a liquid and that liquid is released into the surrounding natural ground through leach drains. However, in many areas the use of conventional leach drains would result in contaminants in the effluent from the septic tank entering the natural subterranean water and from there flowing into local rivers and wetlands causing, as a result, environmental damage. It is now common for local authorities to prohibit the use of conventional leach drains in areas where the water table is less than a minimum specified distance below the natural ground level, although these considerations are generally based on engineering constraints rather than on a sound technical approach to the control of contaminant migration and environmental impact. Normally the authorities require a distance of at least one and a half to two metres between the base of the leach drain and the normal upper level of the water table. Also there are areas where the existing nutrient level in the ground, groundwater or surface water is such that effluent discharge thereinto should or must be treated prior to discharge to reduce the nutrients therein so any increase in the existing nutrient level is minimised and any potential for increased environmental impact is minimised.

It will thus be appreciated that there are many desirable residential areas where conventional reticulated sewerage systems are not available and where the soil quality, water table and/or nutrient conditions are such that domestic septic tank systems with conventional leach drains may not be usable in order to protect the quality of the local environment. It is therefore the object of the present invention to provide a method and apparatus for the treatment of contaminated waste liquid which is environmentally acceptable, effective in operation and can operate in areas of sensitive prevailing environmental conditions, such as where the normal water table is of a height which does not permit the use of conventional septic system leach drains where the natural soils have no appreciable treatment abilities, or where the underground water is used for potable purposes, or in catchments where there is excessive nutrient enrichment of surface and groundwater.

A number of liquid waste disposal systems have been proposed, of which the following are typical examples.

WO-A-83/01204 describes the containment of hazardous organic waste in waste disposal sites sealed with conventional polymeric or clay liners. An additional organoclay/soil layer or bed detoxifies the waste, either routinely or in the event of leakage through the liner, by binding organic material and removing it from the leachate, which is then released into the ground water. Nowhere is the containment or treatment of contaminated domestic effluent, through the use of organoclay, mentioned in that document.

DE-A-3720917 is directed to the removal of hydrocarbons by absorption into activated charcoal. It describes a fixed bed absorption process employing high rates of effluent throughput.

AU-A 36665/78 describes the containment of aqueous liquid waste by mixing it with wetted solid inorganic waste materials in a substantially water impervious basin, such as a clay pit, e.g. during normal clay pit operation. No waste detoxifying treatment is disclosed.

WO-A-80/02556 is concerned with the treatment of domestic waste water by a septic tank in combination with a sand filter. When nitrogen treatment is contemplated, an additional treatment vessel separate from the sand filter is necessary.

US-A-4368120 describes a method of treating effluent from refuse in a landfill which includes a water-impermeable refuse basin, a catch basin, and a lagooning system. Leachate is conveyed from the refuse basin to the catch basin and then to the lagooning system. The leachate is treated in the lagooning system in at least two stages; the first stage consists primarily of oxidation by aeration and the second stage consists primarily of oxidation by biological means.

In contrast to these proposed procedures, the present invention now provides a method for the non-biological treatment of waste liquid containing known contaminants comprising delivering the liquid into a reservoir containing a pervious mass of a sorptive treatment medium, by liquid distribution means located in the reservoir along the length of said distribution means the reservoir being lined with a material at least impervious to the liquid to prevent direct leakage from the reservoir to the ground, characterised by maintaining intimate contact between the liquid and the treatment medium for a period sufficient to interact to reduce selected contaminants in the liquid to predetermined levels and wherein the treated liquid is allowed to pass through a sand layer covering the reservoir to evaporate or pass into the adjacent ground after reduction of said selected contaminants.

The required residence time of the waste liquid being treated in the reservoir is dependent on the nature and relative quantities of the contaminants to be removed by the treatment medium, and upon the predetermined levels of contaminants allowable in the released liquid. Factors relevant to the residence time are, the size of the reservoir, the input rate of effluent, the ratio of evaporation compared rainfall, the location of the delivery point of the waste liquid into the reservoir, the length of the flow path through the treatment medium to the sand layer and the hydraulic head differential between the leach drain and the outlet. Depending upon these factors and the excess of evaporation, there may be no overflow from the reservoir at all. This does not prejudice the efficiency of effluent control.

Conveniently there is also provided an apparatus for the non-biological treatment of waste liquid when used in carrying out the above described method comprising a reservoir lined with a material at least impervious to the waste liquid to be treated, a pervious mass of a sorptive treatment medium in the reservoir, waste liquid distribution means located in the reservoir and arranged to disperse said liquid into the sorptive treatment medium, a sand layer covering the medium in the reservoir, the arrangement being such that the waste liquid delivered into the reservoir must travel through the treatment medium, at least a predetermined distance selected to provide a resident period for the liquid in the treatment medium to reduce selected contaminants in the liquid to the predetermined level.

Preferably, the waste liquid is delivered into the reservoir in the vicinity of the bottom thereof, or at least below the surface of the treatment medium to provide a substantial residence time. Optionally, baffles may be provided extending from above the upper level of the treatment medium to near the bottom of the reservoir to increase the length of the flow path and hence residence time of the liquid.

In treating waste liquid released from domestic septic tanks, the principal contaminants to be removed are bacteria, phosphorus and nitrogen, and therefore the treatment medium is of a composition that has high bacteria phosphorus and nitrogen absorption capacities. A typical medium consists, for example, of about 70% sand, about 30% red mud (alumina refining residue) and a small amount of gypsum, say 1% to 3%. The term "Red Mud" is well known in the aluminium processing industry and is the residue from the extraction of aluminium oxide (Al₂O₃ ) from Laterite or Bauxite ores by the Bayer Process. The presence of iron oxides, aluminium oxides and aluminosilicates, the very small particle size, and other specific chemical characteristics of this residue results in the high contaminant removal capacity.

Other suitable media include, amongst others, the following or combinations of the following which have the required sorptive properties: sand, natural clays, loam soils, activated carbon, alum, specific ion exchange resins, iron filings and heavy mineral processing wastes.

Conveniently the reservoir may be fully below ground or partly above the level of the surrounding ground and the sand surrounds that part of the wall of the reservoir above ground level. In this way the treated liquid may migrate through the sand into the ground without creating surface water on the ground adjacent the reservoir

The high efficiency which can be achieved in contaminant removal is due to two inherent fundamental features of the flow structure:
(1) There can be no overflow until all of the treatment medium has become fully saturated with effluent and therefore solid/liquid contact is extremely high.
(2) There is a long contact time between solid and liquid.

The degree of intimacy of solid/liquid contact and the length of contact time are fundamental features in determining the rate and efficiency of solute phase transfer either in terms of solute deposits on solid phase or solute leaching from the solid to the liquid phase. Furthermore the apparatus offers the opportunity to control contact time and flow rate by simply modifying the height of the perimeter wall or the head at the liquid delivery point.

The reservoir may be formed on the surface of the ground or by digging an appropriate sized hole in the ground and lining that hole with a liquid impervious sheet material, such as a plastic sheet, which in view of the size of the reservoir, will normally be required to be of a fabricated bonded or welded construction to eliminate the risk of leakage of liquid into the surrounding ground at joins in the sheet. The plastic sheet is conveniently of a thickness of the order of up to 2 mm or more to have the required strength to resist tearing or puncturing when exposed to the conditions that will be normally encountered in the construction and operation of the effluent reservoir.

The invention will be more readily understood from the following description of one practical arrangement thereof as illustrated in the accompanying drawings.

In the drawings:
Figure 1 isa plan view of the treatment reservoir;
Figure 2 is a longitudinal sectional view along the line 2-2 in Figure 1; and
Figure 3 is a transverse cross-sectional view along the line 3-3 in Figure 1.

Referring now to the drawings, the reservoir as illustrated is of a rectangular shape which is convenient for the construction of the impervious liner, however, the reservoir may be of any desired shape. Also as illustrated, the reservoir is divided into two independent sections by the central wall 12 as will be referred to in more detail hereinafter. Depending upon the conditions of use, and requirements of application this feature may be included, however, some authorities responsible for the control of effluent disposal require two leach systems for each on-site effluent disposal system. Also as illustrated, the reservoir is constructed above the level of the surrounding natural ground and again, this is merely one form of reservoir which may equally be constructed partly or fully below ground level.

In a first application, in which one or more, commonly two cells are to be used, the reservoir has a continuous peripheral wall. Each working reservoir has provided therein a leach drain 15, located centrally within the reservoir, each connected to a flow diverter 17 which enables the incoming liquid to be selectively diverted into either or both of the leach drains 15 and 16. Optionally, the leach drain may be located on a base of sand (not shown) or other suitable pervious material in order to gain more effluent head relative to the perimeter wall 11, and to immerse the infiltration area.

In a second application, the reservoir has a continuous peripheral wall 11 and a central longitudinal dividing wall 12, which together define two working reservoirs 13 and 14. Each working reservoir has provided therein respective leach drain units 15 and 16, each connected to a flow diverter unit 17 which enables the incoming liquid to be selectively directed into either or both of the leach drains 15 and 16.

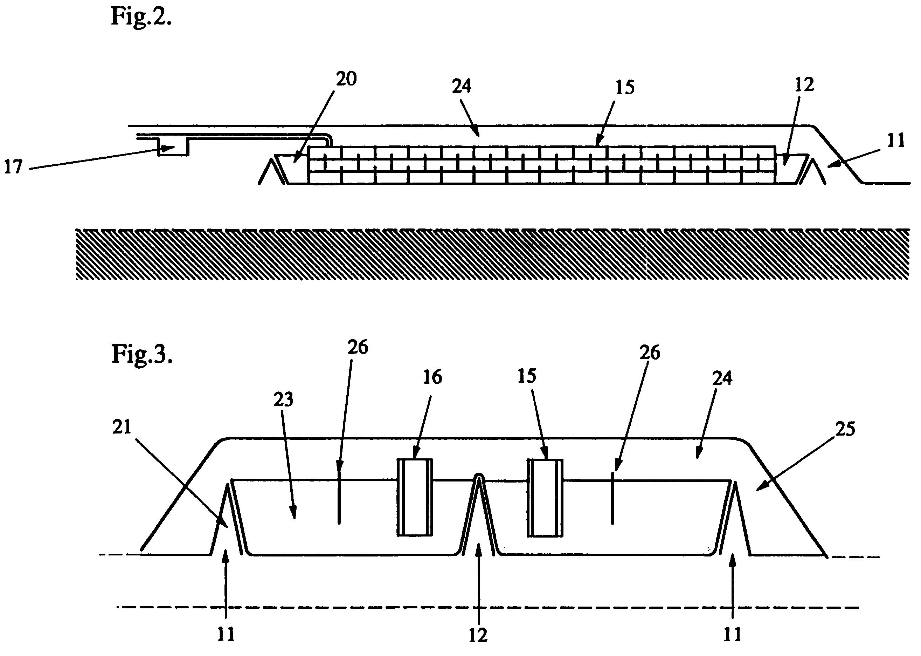

The perimeter wall 11 of the reservoir is conveniently of concrete which may be preformed and assembled on site, or constructed in situ by use of appropriate form moulds, and the construction of the wall preferably provides an inverted V-shape to the finished wall for stability. Alternatively the perimeter wall may be formed by mounding soil or any other suitable material to form a shape over which the impervious membrane may be placed. It will be noted in Figure 3 that the central wall 12 is slightly higher than the perimeter wall 11, and this is to ensure that when the working reservoirs are being operated in sequence, there is no flow of liquid from one working reservoir to the other.

All flows are outwardly over the perimeter wall of the reservoir and preferably over the selected portion 27 located opposite to the leach drains 15 and 16 and which is lower than the level of the remainder of the perimeter wall. In this way, a preferred location of discharge of liquid from the reservoir is provided. The respective leach drains 15 and 16 are of identical construction extending substantially the full length of the respective working reservoirs and are located off centre with respect of each of the working reservoirs towards the dividing wall 12. The leach drains 15 and 16 may be of any suitable construction and shape, for example, circular, to provide the required distribution of the incoming contaminated liquid reservoir. A circular leach drain shape, also commonly referred to as a soak well positioned vertically may also be used, as also can a circular shaped reservoir.

In a third application, each reservoir has a containing wall equivalent to the central wall 12. The leach drain is positioned close to the central wall 12 and flow is generally in the direction away from the containing wall.

A layer of coarse particle material, such as coarse sand, is optionally provided to surround or enclose the leach drains 15 and 16 to provide a jacket to minimise accumulation of slime that would restrict the outflow from the drains.

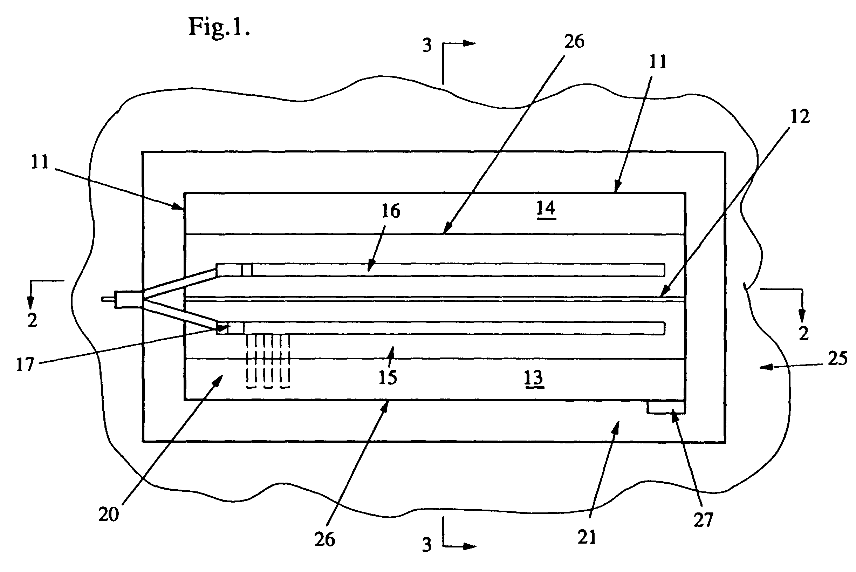

In the embodiment illustrated, a single drain is shown in each working reservoir, however, a series of parallel drains can be provided distributed across the reservoir, or a series of secondary leach drains, branching from the main leach drains 15 and 16, may be provided as shown in broken outline in Figure 1. All such drains are optionally enclosed in coarse sand or like coarse material as previously referred to. The increased leach drain distribution is considered desirable in order to achieve desired throughflow rate when the pressure head generating the flow into the drains and through the treatment medium is relatively small, when the permeability of the treatment medium is inherently low, or when the clogging of the treatment medium surrounding the leach drains occurs following extended usage reducing the hydraulic permeability of the treatment medium and hence the flow rate is low. In this regard, it may also be desirable to provide a reduced height area in the perimeter wall, particularly in the desired flow rate through the reservoir. When such a reduced height area is provided, it is preferably located at a maximum distance from the entry of the liquid into the reservoir, so the liquid has a long flow path and hence an increased residence time in the reservoir. The reduced height of a section of the perimeter wall is indicated in broken outline at 21 in the working reservoir 23 in Figure 3 of the drawing.

For other applications, it may be desirable to increase the diameter (height) of the leach drain, and the adjacent bed of treatment medium in order to achieve desired flow rate, if a low permeability treatment medium is to be used.

Where there is an excess of rainfall over evaporation, a membrane should be provided to prevent the infiltration of rainwater.

The liner 20 is prefabricated from polythene sheet material or other suitable impervious material to the required shape to cover the entire internal surface of each of the working reservoirs 13 and 14 and to extend to the top of the perimetal walls. The liners for the respective working reservoirs 13 and 14 may be made individually or of a one piece construction.

Optionally, air or other gas can be injected to increase the efficiency of the effluent treatment process.

The working reservoirs ara each filled with an appropriate material as indicated at 23, commonly referred to as sorptive treatment medium, which will support and/or permit the necessary physical and/or chemical activity to remove the selected contaminate from the contaminated liquid delivered into the reservoirs. The sorptive treatment medium within the reservoirs and the reservoir outer walls are optionally covered completely with a layer 24 of porous sand material with a bank 25 of sand forming a continuation of the layer 24 of sand overlying the reservoirs. The form of the sand bank and overlying layer are clearly seen in Figures 2 and 3. This construction of the enclosing sand layer and banks provides facility for the treated liquid to be evaporated from the exposed surface of the sand layer and bank and also for the treated liquid to pass downwardly through the sand bank to enter the surrounding natural ground. These processes may occur acceptably without a sand cover layer in certain applications.

As the leach drains 15 and 16 deliver the contaminated liquid into the lower regions of the respective working reservoirs 13 and 14 below the surface of the mud and adjacent the dividing wall 12, the flow path for the liquid through the sorptive treatment medium will be generally in a direction from the inner lower portion of the reservoir to the outer upper end where the liquid can pass over the perimeter wall into the overlying sand layer. In order to control short circuiting of the contaminated liquid baffles such as indicated at 26 in Figure 3 may be provided so that the contaminated liquid may not be discharged over the perimetal wall of the reservoir without first passing beneath the tower end of the baffle.

Baffles may also be arranged to cause the liquid to follow a non-linear path as viewed from above, which may be of serpentine form, through the reservoir.

The provision of two working reservoirs 13 and 14 with respective leach drains 15 and 16 enables the working reservoirs to be used alternately so that while one is in use, the other may be dried out and if necessary, the treatment medium therein may be removed and replaced with fresh treatment medium. Also under periods of unusually high input of contaminated liquid, the flow diverter unit 17 may be set to distribute the incoming liquid to the leach drains in both working reservoirs.

It will be appreciated that the contaminated liquid treatment system as above described would enable the use of conventional septic effluent treatment tanks in residential areas where the water table is too high to permit the use of conventional leach drains buried directly in the ground in the conventional manner or where the geochemistry of the underlying sediments causes them to be poor contaminant filters and so that the nature and quantities of contaminants that may ultimately reach the natural underground water is within acceptable limits.

It is to be also appreciated that the contaminated liquid treatment system disclosed herein not only enables conventional septic effluent treatment tanks in residential areas were the water table is too high, but also in areas where this height is not necessarily a problem, but water quality is a problem, in that it must be maintained at potable quality to support existing groundwater abstraction schemes or public water supply and therefore the use of conventional leach drains is a constraint in that conventional leach drains may contaminate the groundwater or surface water beyond potable limits. In addition, groundwater may not be the constraint that is overcome, but surface water also, in terms of its nutrients status on an overall catchment basis may be, and is in many instances, a constraint to the utilisation of conventional septic leach drains as they do not remove nutrients. The system disclosed herein facilitates use of on-site waste disposal systems where the catchment condition is one of excessive nutrient enrichment and further development based on traditional technology is therefore constrained

## Claims

1. A method for the non-biological treatment of waste liquid containing known contaminants comprising delivering the liquid into a reservoir (13,14) containing a pervious mass of sorptive treatment medium (23) by liquid distribution means (15, 16) located in said reservoir (13, 14) for distributing waste liquid into said reservoir (13, 14) along the length of said distribution means (15), the reservoir (13, 14) being lined with a material (20) at least impervious to the liquid to prevent direct leakage from the reservoir (13, 14) to the ground, characterised by maintaining intimate contact between the liquid and the sorptive treatment medium (23) for a period sufficient to interact to reduce selected contaminants in the liquid to predetermined levels, and wherein the treated liquid is allowed to pass through a sand layer (24) covering the reservoir (13, 14) to evaporate or pass into the adjacent ground after reduction of said selected contaminants.

2. A method as claimed in claim 1, characterised in that the method is used for the treatment of domestic effluents.

3. A method as claimed in claim 1 or 2, characterised in that the liquid is introduced adjacent one end of the reservoir (13, 14) partly or fully below the surface of the sorptive treatment medium (23), and passes out of the reservoir (13, 14) at or adjacent the opposite end of the reservoir (13, 14) above the level of the perimeter wall (11).

4. A method as claimed in any one of claims 1 to 3, characterised in that at least one location in the reservoir (13, 14) a substantial portion of the liquid flowing through the sorptive treatment medium (23) is passed through the treatment medium (23) at a predetermined level (21) spaced downward from the surface of the treatment medium (23).

5. A method as claimed in claim 3, characterised in that at least one barrier (26) extends across substantially the full extent of the reservoir (13, 14) at a location intermediate the said ends and partially through the depth of the sorptive treatment medium (23) from the top surface thereof, and all liquid flowing to said opposite end of the reservoir (13, 14) is passed beneath said barrier (26).

6. A method as claimed in any one of claims 1 to 5, characterised in that a substantial portion of the liquid flowing through the sorptive treatment medium (23) is caused to follow a path of non-linear form as viewed from above.

7. A method as claimed in any one of claims 1 to 6, characterised in that the waste liquid is septic tank effluent and the sorptive treatment medium is of a composition of phosphorus and nitrogen sorption capacity.

8. A method as claimed in claim 7, characterised in that the sorptive treatment medium (23) also has a bacteria sorption or filtration capacity.

9. An apparatus for the non-biological treatment of waste liquid when used in carrying out the method claimed in claim 1, characterised by comprising a reservoir (13, 14) lined with material (20) at least impervious to the waste liquid to be treated, a pervious mass of sorptive treatment medium (23) in the reservoir (13, 14), waste liquid distribution means (15, 16) located in the reservoir (13, 14) and arranged to disperse said liquid into the sorptive treatment medium (23), a sand layer (24) covering the sorptive treatment medium (23) in the reservoir (13, 14), wherein the waste liquid delivered into the reservoir (13, 14) travels through the sorptive treatment medium (23) at least a predetermined distance selected to provide a resident period for the liquid in the treatment medium to reduce selected contaminants in the liquid to the predetermined level.

10. An apparatus as claimed in claim 9, characterised in that at least two of said reservoirs (13, 14) are provided in a side by side relation each with a pervious mass of sorptive treatment medium therein, at least one liquid distribution means (15, 16) in each reservoir (13, 14) and means (17) operable to direct waste liquid from a source to conduits in (15, 16) in either or both reservoirs (13, 14).

11. An apparatus as claimed in claim 9 or 10, characterised in that the or each reservoir (10) has a portion (21) of the wall (11) of the reservoir (13, 14) below the level of the remainder of the wall (11) of the reservoir (13, 14) providing a preferred location (27) or discharge of liquid from the reservoir (13, 14).

12. An apparatus as claimed in any one of claims 9 to 11, characterised in that flow directing means (17) are provided in the sorptive treatment media (23) to direct the liquid along a non-linear path as viewed from above to the outflow area (27).

13. An apparatus as claimed in any one of claims 9 to 11, characterised in that there is provided in the reservoir (13, 14) between the distribution means (15, 16) and said outflow area (27) at least one barrier (26) extending across substantially the full extent of the reservoir (13, 14) and partially through the depth of the sorptive treatment medium (23) from the top surface thereof and all liquid flowing through the reservoir (13, 14).

14. An apparatus as claimed in any one of claims 9 to 13, characterised in that means (26) are provided in the sorptive treatment medium (23) to direct the liquid along a non-linear path as viewed from above as the liquid flows through the reservoir (13, 14).

15. An apparatus as claimed in any one of claims 9 to 14, characterised in that the waste liquid is septic tank effluent and the sorptive treatment medium is of a composition of phosphorus and ammonia sorption capacity.

16. An apparatus as claimed in claim 15, characterised in that the sorptive treatment medium also has a bacteria sorption or filtration capacity.

## Patentansprüche

1. Verfahren zur nicht-biologischen Behandlung von Abfallflüssigkeit, welche bekannte Verunreinigungen enthält, wobei die Flüssigkeit in einen Behälter (13,14), der eine durchlässige Masse von sorbierendem Behandlungsmedium (23) enthält, durch in dem Behälter (13,14) angeordnete Flüssigkeitsverteilereinrichtungen (15,16) geleitet wird, um Abfallflüssigkeit in dem Behälter (13,14) entlang der Längserstreckung der Verteilereinrichtungen (15) zu verteilen, und wobei der Behälter (13,14) mit einem Material (20) ausgekleidet ist, das wenigstens für die Flüssigkeit undurchlässig ist, um ein direktes Austreten aus dem Behälter (13, 14) in den Erdboden zu verhindern, dadurch gekennzeichnet, daß ein inniger Kontakt zwischen der Flüssigkeit und dem sorbierenden Behandlungsmedium (23) über eine für eine Wechselwirkung ausreichende Zeitspanne aufrechterhalten wird, um ausgewählte Verunreinigungen in der Flüssigkeit auf vorbestimmte Werte zu verringern, und daß die behandelte Flüssigkeit durch eine den Behälter (13,14) abdeckende Sandschicht (24) fließen kann, um nach der Verringerung der ausgewählten Verunreinigungen zu verdampfen oder in den benachbarten Erdboden zu fließen.

2. Verfahren nach Anspruch 1, dadurch gekennzeichnet, daß es für die Behandlung von häuslichen Ausflüssen angewendet wird.

3. Verfahren nach Anspruch 1 oder 2, dadurch gekennzeichnet, daß die Flüssigkeit nahe einem Ende des Behälters (13,14) teilweise oder ganz unterhalb der Oberfläche des sorbierenden Behandlungsmediums (23) eingeleitet wird und aus dem Behälter (13,14) an oder nahe dem entgegengesetzten Ende des Behälters (13,14) oberhalb der Höhe der Umfangswand (11) austritt.

4. Verfahren nach einem der Ansprüche 1 bis 3, dadurch gekennzeichnet, daß an wenigstens einer Stelle im Behälter (13,14) ein wesentlicher Teil der durch das sorbierende Behandlungsmedium (23) fließenden Flüssigkeit durch das Behandlungsmedium (23) in einer vorbestimmten Höhe (21) geleitet wird, die von der Oberfläche des Behandlungsmediums (23) einen Abstand nach unten besitzt.

5. Verfahren nach Anspruch 3, dadurch gekennzeichnet, daß wenigstens eine Barriere (26) sich quer im wesentlichen über die ganze Abmessung des Behälters (13,14) an einer Stelle zwischen den genannten Enden und teilweise über die Tiefe des sorbierenden Behandlunsmediums (23), ausgehend von der Oberfläche desselben, erstreckt und alle zu dem entgegengesetzten Ende des Behälters (13,14) strömende Flüssigkeit unter dieser Barriere (26) durchgeleitet wird.

6. Verfahren nach einem der Ansprüche 1 bis 5, dadurch gekennzeichnet, daß ein wesentlicher Teil der durch das sorbierende Behandlungsmedium (23) fließenden Flüssigkeit veranlaßt wird, einem nicht geradlinigen Weg, betrachtet von oben, zu folgen.

7. Verfahren nach einem der Ansprüche 1 bis 6, dadurch gekennzeichnet, daß die Abfallflüssigkeit der Ausfluß eines Klärbeckens oder Faulbehälters ist und das sorbierende Behandlungsmedium eine Zusammensetzung von Phosphor- und Stickstoff-Sorptionsvermögen aufweist.

8. Verfahren nach Anspruch 7, dadurch gekennzeichnet, daß das sorbierende Behandlungsmedium (23) auch ein Bakterien-Sorptions- oder Filtrierungsvermögen besitzt.

9. Vorrichtung zur nicht-biologischen Behandlung von Abfallflüssigkeit zur Durchführung des Verfahrens nach Anspruch 1, gekennzeichnet durch einen Behälter (13,14), der mit einem Material (20) ausgekleidet ist, das wenigstens für die zu behandelnde Abfallflüssigkeit undurchlässig ist, eine durchlässige Masse aus sorbierendem Behandlungsmedium (23) im Behälter (13,14), Abfallflüssigkeits-Verteilereinrichtungen (15,16), die im Behälter (13,14) so angeordnet und ausgebildet sind, daß sie die Flüssigkeit in dem sorbierenden Behandlungsmedium (23) dispergieren, eine Sandschicht (24), welche das sorbierende Behandlungsmedium (23) im Behälter (13,14) abdeckt, wobei die in den Behälter (13,14) geleitete Abfallflüssigkeit durch das sorbierende Behandlungsmedium (23) wenigstens über einen ausgewählten vorbestimmten Abstand strömt, um eine derartige Aufenthaltsdauer der Flüssigkeit im Behandlungsmedium zu erreichen, daß die ausgewählten Verunreinigungen in der Flüssigkeit auf den vorbestimmten Wert verringert werden.

10. Vorrichtung nach Anspruch 9, dadurch gekennzeichnet, daß wenigstens zwei Behälter (13,14) nebeneinander vorgesehen sind, deren jeder eine durchlässige Masse von sorbierendem Behandlungsmedium, wenigstens eine Flüssigkeitsverteilereinrichtung (15,16) in jedem Behälter (13,14) und Einrichtungen (17) enthält, die betätigbar sind, um Abfallflüssigkeit von einer Quelle zu Leitungen in den Einrichtunten (15,16) in einem oder beiden Behältern (13,14) zu leiten.

11. Vorrichtung nach Anspruch 9 oder 10, dadurch gekennzeichnet, daß bei dem oder jedem Behälter (10) ein Teil (21) der Wand (11) des Behälters (13,14) unterhalb der Höhe der übrigen Wand (11) des Behälters (13,14) liegt, welcher eine bevorzugte Stelle (27) zum Auslaß der Flüssigkeit aus dem Behälter (13,14) bildet.

12. Vorrichtung nach einem der Ansprüche 9 bis 11, dadurch gekennzeichnet, daß Strömungsleiteinrichtungen (17) im sorbierenden Behandlungsmedium (23) vorgesehen sind, um die Flüssigkeit längs eines nicht geradlinigen Weges, betrachtet von oben, zum Abflußbereich (27) zu leiten.

13. Vorrichtung nach einem der Ansprüche 9 bis 11, dadurch gekennzeichnet, daß im Behälter (13,14) zwischen den Verteilereinrichtungen (15,16) und dem Abflußbereich (27) wenigstens eine Barriere (26) vorgesehen ist, die sich quer im wesentlichen über die volle Ausdehnung des Behälters (13,14) und teilweise über die Tiefe des sorbierenden Behandlungsmediums (23) von dessen Oberfläche erstreckt, und daß die ganze Flüssigkeit durch den Behälter (13,14) strömt.

14. Vorrichtung nach einem der Ansprüche 9 bis 13, dadurch gekennzeichnet, daß Einrichtungen (26) im sorbierenden Behandlungsmedium (23) vorgesehen sind, um die Flüssigkeit längs eines nicht geradlinigen Weges, betrachtet von oben, zu leiten, wenn die Flüssigkeit durch den Behälter (13,14) strömt.

15. Vorrichtung nach einem der Ansprüche 9 bis 14, dadurch gekennzeichnet, daß die Abfallflüssigkeit der Ausfluß aus einem Klärbecken oder Faulbehälter ist und daß das sorbierende Behandlungsmedium ein zusammengesetztes Phosphor- und Ammoniak-Sorptionsvermögen besitzt.

16. Vorrichtung nach Anspruch 15, dadurch gekennzeichnet, daß das sorbierende Behandlungsmedium auch ein Bakterien-Sorptions- oder Filtrierungsvermögen besitzt.

## Revendications

1. Méthode de traitement non biologique de déchets liquides contenant des contaminants connus ladite méthode comprenant l'amenée du liquide dans une cuve (13, 14) contenant une masse perméable de milieu de traitement sorptif (23) par des moyens de distribution du liquide (15, 16) logés dans ladite cuve (13, 14) pour distribuer le déchet liquide dans ladite cuve (13, 14) sur toute la longueur dudit moyen de distribution (15), la cuve (13, 14), étant chemisée d'un matériau (20) au moins imperméable au liquide pour empêcher toute fuite directe de la cuve (13, 14) vers le sol, caractérisée par le fait que le maintien d'un contact intime entre le liquide et le milieu de traitement sorptif (23) pendant une période suffisante permet une interaction de réduction des contaminants dans le liquide à des niveaux prédéterminés, et de sorte que le liquide traité puisse traverser une couche de sable (24) couvrant la cuve (13, 14) pour s'évaporer ou passer dans le sol voisin après réduction desdits contaminants sélectionnés.

2. Méthode selon la revendication 1 ci-dessus, caractérisée par le fait que cette méthode est utilisée pour le traitement d'effluents ménagers.

3. Méthode selon la revendication 1 ou la revendication 2 ci-dessus, caractérisée par le fait qu'on introduit le liquide dans le voisinage d'une extrémité de la cuve (13, 14) en partie ou complètement en-dessous de la surface du milieu de traitement sorptif (23) et que ce liquide s'évacue de la cuve (13, 14) à l'extrémité opposée ou dans le voisinage de cette dite extrémité opposée de la cuve (13, 14) au-dessus du niveau de la paroi du périmètre (11).

4. Méthode selon l'une quelconque des revendications 1 à 3 ci-dessus, caractérisée par le fait qu'au moins en un endroit à l'intérieur de la cuve (13, 14) une portion substantielle du liquide qui traverse le milieu de traitement sorptif (23) doit traverser le milieu de traitement sorptif (23) à un niveau prédéterminé (21) situé à distance de la surface du milieu de traitement sorptif (23) et vers le bas.

5. Méthode selon la revendication 3 ci-dessus, caractérisée par le fait qu'au moins une barrière (26) s'étend sensiblement en travers de toute la cuve (13, 14) en un endroit intermédiaire entre lesdites extrémités et partiellement sur toute la profondeur du milieu de traitement sorptif (23) à partir de la surface supérieure dudit milieu de traitement sorptif (23), et tout le liquide qui s'écoule vers ladite extrémité opposée du réservoir (13, 14) doit passer au-dessous de ladite barrière (26).

6. Méthode selon l'une quelconque des revendications 1 à 5, caractérisée par le fait qu'une portion substantielle du liquide qui traverse le milieu de traitement sorptif (23) est obligé de suivre un chemin de forme non linéaire vu de dessus.

7. Méthode selon l'une quelconque des revendications 1 à 6, caractérisée par le fait que le déchet liquide est un effluent de fosse septique et que le milieu de traitement sorptif est une composition de phosphore et d'azote ayant une capacité de sorption.

8. Méthode selon la revendication 7, caractérisée par le fait que le milieu de traitement sorptif (23) a aussi une capacité de sorption ou de filtrage par des bactéries.

9. Appareil pour le traitement non biologique de déchets liquides lorsqu'on l'utilise pour la mise en oeuvre de la méthode revendiquée à la revendication 1 ci-dessus, caractérisé par le fait qu'il comprend une cuve (13, 14) chemisée avec un matériau (20) au moins imperméable au déchet liquide à traiter, une masse perméable de milieu de traitement sorptif (23) dans la cuve (13, 14), des moyens de distribution du déchet liquide (15, 16) situés dans la cuve (13, 14) et aménagés pour disperser ledit liquide dans le milieu de traitement sorptif (23), une couche de sable (24) qui recouvre le milieu de traitement sorptif (23) dans la cuve (13, 14), de sorte que le déchet liquide amené dans le réservoir (13, 14) traverse le milieu de traitement sorptif (23) au moins à une distance prédéterminée choisie pour imposer au liquide un temps de résidence dans le milieu de traitement sorptif pour réduire des contaminants sélectionnés contenus dans le liquide au niveau prédéterminé.

10. Appareil selon la revendication 9, caractérisé par le fait qu'il comporte au moins deux cuves (13, 14) côte-à-côte qui contiennent du milieu de traitement sorptif, au moins un moyen de distribution du liquide (15, 16) dans chacune des cuves (13, 14) et des moyens (17) actionnables pour diriger le déchet liquide d'une source vers des conduits (15, 16) dans l'une ou l'autre des cuves (13, 14) ou dans les deux à la fois.

11. Appareil selon la revendication 9 ou la revendication 10, caractérisé par le fait que le réservoir ou chacun des réservoirs (10) comporte une portion (21) de la paroi (11) de la cuve (13, 14) en-dessous du niveau du reste de la paroi (11) de la cuve (13,14) laquelle portion fournit un endroit préféré (27) de déchargement du liquide de la cuve (13, 14).

12. Appareil selon l'une quelconque des revendications 9 à 11, caractérisé par le fait que des moyens de diriger le flux (17) ont été prévus dans les milieux de traitement sorptif (23) pour diriger le liquide le long d'un chemin non linéaire vu de dessus vers la région de sortie de flux (27).

13. Appareil selon l'une quelconque des revendications 9 à 11, caractérisée par le fait que dans la cuve (13, 14) se trouve entre les moyens de distribution (15, 16) et ladite région de sortie de flux (27) au moins une barrière (26) s'étendant sensiblement sur la profondeur du milieu de traitement sorptif (23) à partir de la surface supérieure de ladite cuve (13, 14) et sur la totalité du liquide qui s'écoule dans le réservoir (13, 14).

14. Appareil selon l'une quelconque des revendications 9 à 13, caractérisé par le fait que des moyens (26) ont été placés dans le milieu de traitement sorptif (23) pour diriger le liquide le long d'un chemin non linéaire vu de dessus au fur et à mesure que le liquide traverse la cuve (13, 14).

15. Appareil selon l'une quelconque des revendications 9 à 14, caractérisé par le fait que le déchet liquide est un effluent de fosse septique et que le milieu de traitement sorptif est une composition de phosphore et d'ammoniac à capacité de sorption.

16. Appareil selon la revendication 15, caractérisé par le fait que le milieu de traitement sorptif a aussi une capacité de sorption ou de filtrage par des bactéries.
